# FASCICULE DE BREVET EUROPEEN

(11) **EP 3 670 966 B1**
(45) Date de publication et mention de la délivrance du brevet: **30.06.2021**
(21) Numéro de dépôt: 19217529.7
(22) Date de dépôt: 18.12.2019
(51) Int. Cl.: F16H 57/04, F02C 7/06, F02C 7/36

(54) **DISTRIBUTEUR D'HUILE DE LUBRIFICATION POUR UN REDUCTEUR MECANIQUE DE TURBOMACHINE D'AERONEF**
SCHMIERÖLVERTEILER FÜR MECHANISCHES REDUKTIONSGETRIEBE EINES LUFTFAHRZEUG-TURBOTRIEBWERKS
DISPENSER OF LUBRICATING OIL FOR A MECHANICAL GEAR OF AN AIRCRAFT TURBINE ENGINE

(30) Priorité: 21.12.2018 FR 1873845
(43) Date de publication de la demande: 24.06.2020
(73) Titulaire: Safran Transmission Systems, 92700 Colombes (FR)
(72) Inventeur: CHARRIER, Mathieu, Jean, 77550 MOISSY-CRAMAYEL (FR); GOUIN, Gilles, Gaston, Jacques, 77550 MOISSY-CRAMAYEL (FR); MORELLI, Boris, Pierre, Marcel, 77550 MOISSY-CRAMAYEL (FR)
(74) Mandataire: Gevers & Orès

(56) Documents cités:
- US-A1- 2013 283 756
- US-A1- 2014 294 558
- US-A1- 2016 369 884
- US-A1- 2017 130 605

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, FR-A1-3 041 054, US-A1-2013/283756 et FR-A1-3 047 279.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique. Il existe plusieurs types d'engrènement par contact comme avec des dentures droites ou hélicoïdales.

La présente invention propose un perfectionnement simple, efficace et économique pour optimiser la lubrification d'un réducteur.

### Résumé de l'invention

L'invention concerne un distributeur d'huile de lubrification pour un réducteur mécanique de turbomachine, en particulier d'aéronef, ce distributeur ayant une forme générale annulaire autour d'un axe X et comportant des premier et second circuits d'huile indépendants, ledit premier circuit d'huile comportant une première entrée d'huile reliée par une première chambre annulaire à plusieurs sorties d'huile, et ledit second circuit d'huile comportant une seconde entrée d'huile reliée par une seconde chambre annulaire à plusieurs sorties d'huile, caractérisé en ce qu'il est formé d'une seule pièce, et en ce que ladite première chambre comporte une section qui est au moins en partie imbriquée dans une section de ladite seconde chambre.

Un distributeur d'huile de ce type comprend donc deux circuits indépendants. Le premier circuit peut être utilisé pour alimenter en huile des dentures d'engrènement dans le réducteur, telles que des dentures du solaire et des satellites du réducteur. L'huile de lubrification du premier circuit est en général à une température T1. Le second circuit peut être utilisé pour alimenter en huile des paliers de satellites du réducteur. L'huile de lubrification du second circuit est en général à une température T2 qui est supérieure à T1. Le distributeur assure donc l'alimentation du réducteur avec deux huiles à des températures différentes, ces températures étant choisies pour optimiser la lubrification des pièces du réducteur. En fonctionnement, l'huile qui a servi à lubrifier ces pièces est projetée radialement vers l'extérieur par les forces centrifuges et a une température supérieure à sa température initiale par transfert thermique des pièces lubrifiées. Cette huile réchauffée est susceptible de venir au contact du distributeur et de réchauffer par conduction les huiles qui circulent dans les circuits du distributeur, et en particulier l'huile la plus froide à la température T1. Cette huile froide est ainsi susceptible d'être réchauffée par l'huile qui a lubrifié le réducteur, ce qui pourrait avoir un impact négatif sur les performances de lubrification par cette huile froide. L'invention propose de répondre à ce problème en isolant thermiquement au moins une partie du circuit comportant l'huile la plus froide. Ceci est rendu possible en imbriquant les sections des chambres d'huile l'une dans l'autre. On peut obtenir ainsi une chambre « interne » isolée thermiquement par une chambre « externe ». L'huile qui a servi à la lubrification du réducteur peut s'écouler autour de la chambre externe en limitant les risques d'échauffement de l'huile de la chambre interne.

La solution proposée est compatible de tout type de denture (droite ou hélicoïdale), et de tout type de porte-satellites qu'il soit monobloc ou de type cage-porte cage.

Le distributeur selon l'invention peut comprendre une ou plusieurs des caractéristiques suivantes, comme définies dans les revendications
- Les dites première et seconde chambres ont des sections de formes et de tailles différentes,
- la section de ladite première chambre est au moins en partie entourée par la section de ladite seconde chambre,
- lesdites première et seconde chambres s'étendent autour d'une même circonférence,
- lesdites première et seconde chambres ont des dimensions transversales mesurées le long de l'axe X, qui sont différentes,
- lesdites première et seconde chambres ont des dimensions transversales mesurées perpendiculairement audit axe X, qui sont différentes,
- lesdites première et seconde chambres sont formées par deux anneaux tubulaires coaxiaux,
- l'anneau de ladite première chambre comprend une surface externe qui est reliée directement ou par des ponts de matière à une surface interne de l'anneau de ladite seconde chambre, et
- lesdites première et seconde chambres ont en section une forme générale circulaire ou polygonale.

L'invention concerne en outre un réducteur mécanique de turbomachine, en particulier d'aéronef, comportant un distributeur tel que décrit dans ce qui précède.

L'invention concerne en outre un procédé de fabrication d'un distributeur tel que décrit dans ce qui précède, comportant une étape de fabrication additive de ce distributeur.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une section axiale en vue partielle d'un réducteur mécanique,
[Fig. 3] la figure 3 est une vue en coupe axiale d'un réducteur mécanique,
[Fig. 4] la figure 4 est une vue en perspective du réducteur de la figure 3,
[Fig. 5] la figure 5 est une vue en perspective d'un distributeur d'huile de lubrification du réducteur de la figure 3,
[Fig. 6] la figure 6 est une vue en coupe d'un détail du réducteur de la figure 3 et montre une entrée d'huile du distributeur de la figure 5,
[Fig. 7] la figure 7 est une vue en coupe d'un détail du réducteur de la figure 3 et montre une autre entrée d'huile du distributeur de la figure 5,
[Fig. 8] la figure 8 est une vue en coupe simplifié du distributeur visible aux figures 3 à 7,
[Fig. 9] la figure 9 est une vue en coupe simplifiée d'un distributeur selon une variante de réalisation de l'invention,
[Fig. 10] la figure 10 est une vue en coupe simplifiée d'un distributeur selon une autre variante de réalisation de l'invention,
[Fig. 11] la figure 11 est une vue en coupe simplifiée d'un distributeur selon une autre variante de réalisation de l'invention.

### Description détaillée de l'invention

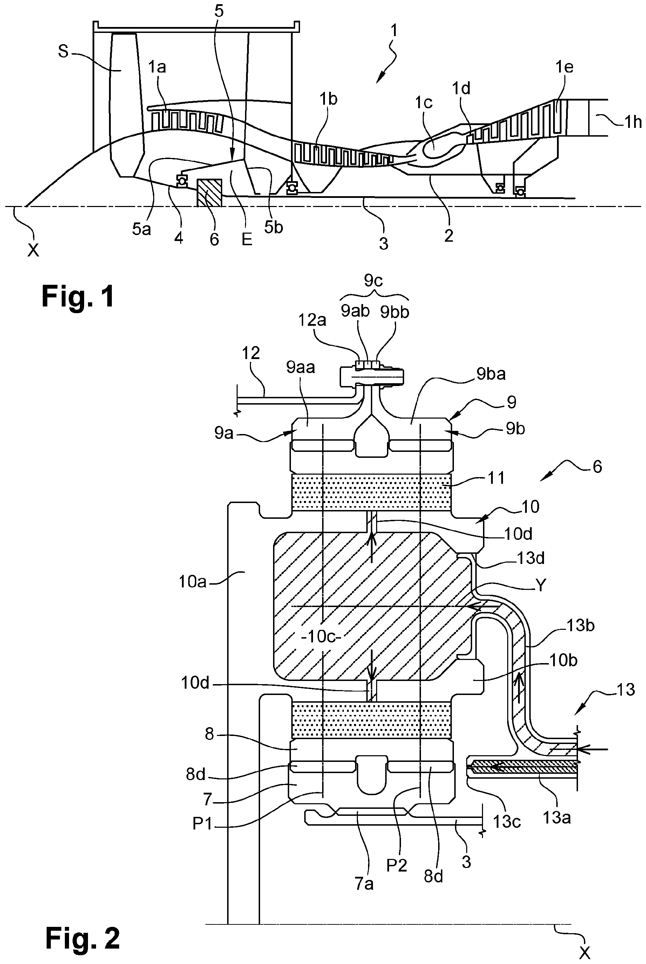

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie avant de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie nous avons :
▪ Dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ Dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
▪ Une demi-couronne avant 9a constituée d'une jante 9aa et d'une demi-bride de fixation 9ab. Sur la jante 9aa se trouve l'hélice avant de la denture du réducteur. Cette hélice avant engrène avec celle du satellite 8 qui engrène avec celle du solaire 7.
▪ Une demi-couronne arrière 9b constituée d'une jante 9ba et d'une demi-bride de fixation 9bb. Sur la jante 9ba se trouve l'hélice arrière de la denture du réducteur. Cette hélice arrière engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices avant et sur un autre plan médian P pour les hélices arrière. Dans les autres figures, dans le cas d'un roulement à deux rangées de rouleaux, chaque rangée d'éléments roulants est aussi centrée sur deux plans médians.

La demi-bride de fixation 9ab de la couronne avant 9a et la demi-bride de fixation 9bb de la couronne arrière 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

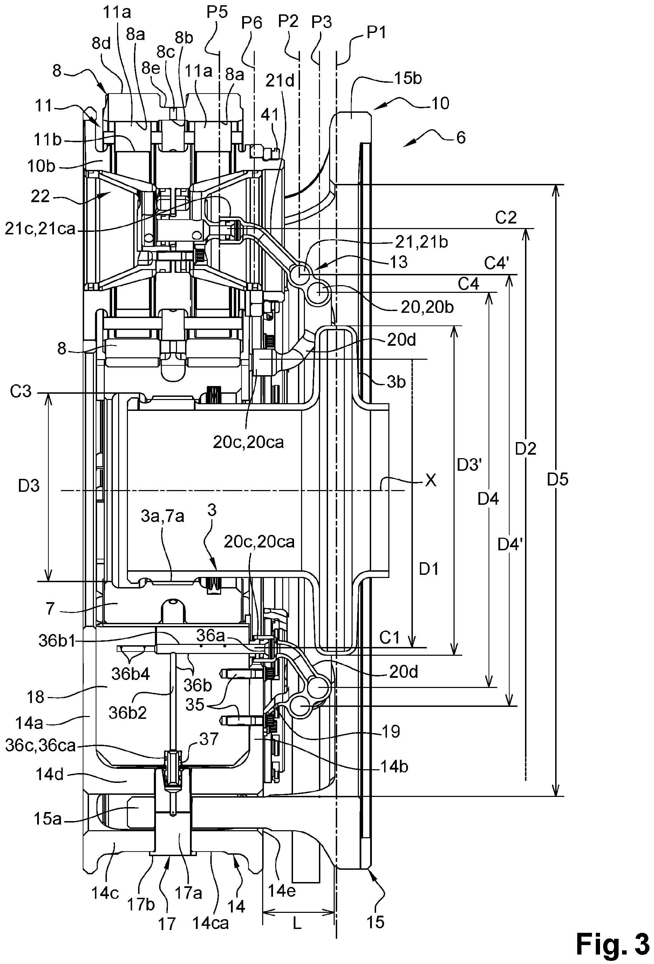

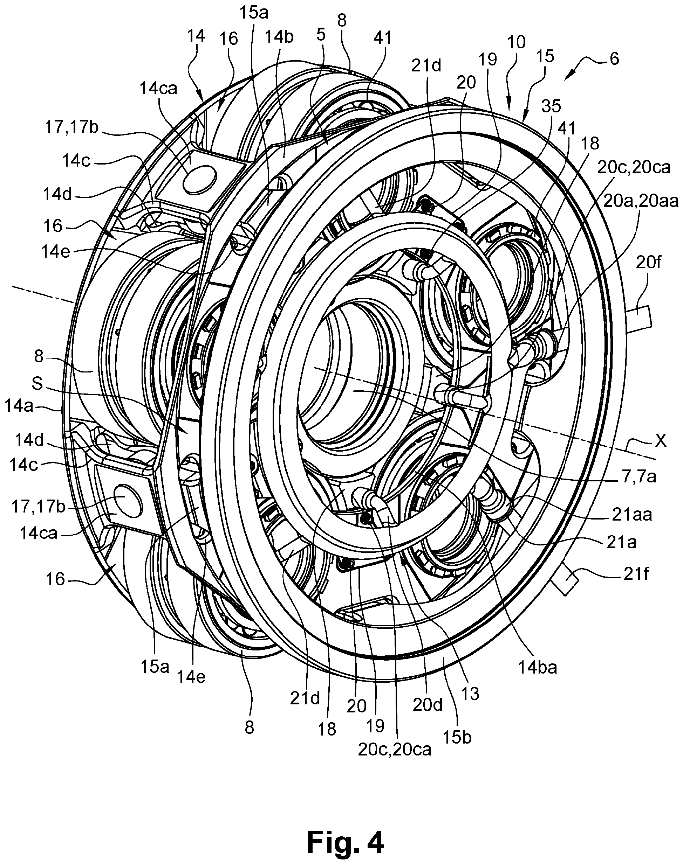

Les figures 3 et 4 représentent un exemple de réalisation d'un réducteur 6.

Le réducteur 6 des figures 3 et 4 comprend un porte-satellites 10 du type à cage 14 et porte-cage 15, la cage 14 et le porte-cage 15 étant reliés par des liaisons à rotules.

La cage 14 comprend deux parois annulaires radiales 14a, 14b s'étendant autour de l'axe X, ces parois 14a, 14b étant parallèles et étant respectivement une paroi radiale avant 14a et une paroi radiale arrière 14b. Les parois 14a, 14b sont reliées entre elles à leurs périphéries externes par des couples de pontets 14c, 14d, régulièrement répartis autour de l'axe X. Ces couples de pontets assurent une liaison structurelle entre les parois 14a, 14b. Chaque couple de pontets comprend deux pontets, respectivement radialement externe 14c et radialement interne 14d, qui s'étendent sensiblement parallèlement le long de l'axe X à distance radiale l'un de l'autre.

Les couples de pontets 14c, 14d définissent entre eux des lumières 16 qui s'étendent circonférentiellement autour de l'axe X et sont délimitées axialement par les bords périphériques externes des parois 14a, 14b. Les couples de pontets sont au nombre de 5 dans l'exemple représenté.

Chaque couple de pontets forme une chape pour accueillir un doigt 15a du porte-cage 15. Autrement dit, les pontets de chaque couple définissent entre eux un logement de réception d'un doigt 15a du porte-cage 15. Des ouvertures 14e de forme oblongue sont réalisées dans la paroi arrière 14b de telle sorte à laisser passer les doigts 15a entre les pontets 14c, 14d. La paroi 14a peut comporter des ouvertures similaires alignées axialement avec les ouvertures 14e de la paroi 14b.

Le nombre de doigts 15a est égal au nombre de couples de pontets 14c, 14d et est de 5 dans l'exemple représenté. Ces doigts 15a s'étendent en saillie axialement vers l'amont depuis un anneau 15b du porte-cage 15 s'étendant autour de l'axe X. Les doigts 15a du porte-cage 15 sont engagés dans les logements inter-pontets par translation axiale depuis l'arrière, à travers les ouvertures 14e de la paroi 14b.

Chaque doigt 15a comprend, sensiblement en son milieu, un évidement de montage d'un palier (non représentée) destiné à être traversé par une broche cylindrique 17 portée par chaque couple de pontets 14c, 14d. Chaque broche 17 traverse le logement inter-pontets et a une orientation sensiblement radiale par rapport à l'axe X. Chaque broche 17 comporte un corps cylindrique 17a relié à une extrémité, ici radialement externe, à une collerette 17b. La broche 17 est ici engagée par translation radiale depuis l'extérieur à travers des orifices radiaux des pontets 14c, 14d, sa collerette 17b étant destinée à venir en appui radial sur une face plane 14ca du pontet externe 14c. Après insertion de la broche 17 dans les orifices des pontets, jusqu'à mise en appui de la collerette 17b sur le pontet externe, la collerette 17b est fixée à ce pontet par exemple par vissage.

Comme on le voit dans les dessins, en position assemblée, l'anneau 15b du porte-cage 15 est écarté axialement d'une distance L1 prédéterminée de la paroi arrière 14b en regard de la cage 14 (figure 3). L'espace annulaire s'étendant entre la périphérie externe de la cage 14 et la périphérie externe du porte-cage 15 est sectorisé par les doigts 15a qui définissent ainsi entre eux des secteurs d'espace S1 (figure 4).

La cage 14 définit un logement interne de réception du solaire 7 d'axe X, des satellites 8 disposés autour du solaire 7 et engrenés avec lui, ainsi que de déflecteurs 18 qui seront décrits dans le détail dans ce qui suit en référence aux figures 14 et suivantes.

Comme décrit dans ce qui précède en relation avec la figure 2, le solaire 7 comprend des cannelures internes 7a d'accouplement à des cannelures externes 3a complémentaires de l'arbre BP 3 (figure 3). On peut constater que les cannelures 3a sont situées à l'extrémité avant de l'arbre BP 3 qui comprend un tronçon aval 3b en forme de soufflet. Ce tronçon 3b est ici situé dans un plan P1 perpendiculaire à l'axe X qui est écarté axialement de la cage 14 du porte-satellites 10 et qui passe sensiblement par l'anneau 15b du porte-cage 15 dans notre exemple. Ce tronçon 3b confère à l'arbre BP 3 une certaine souplesse limitant la transmission des efforts du moteur en fonctionnement vers le réducteur. Les cannelures 3a sont ici situées sur une circonférence C3 d'axe X et de diamètre D3, et le tronçon 3b a un diamètre externe D3' qui est supérieur à D3 et inférieur au diamètre interne D5 de l'anneau 15b.

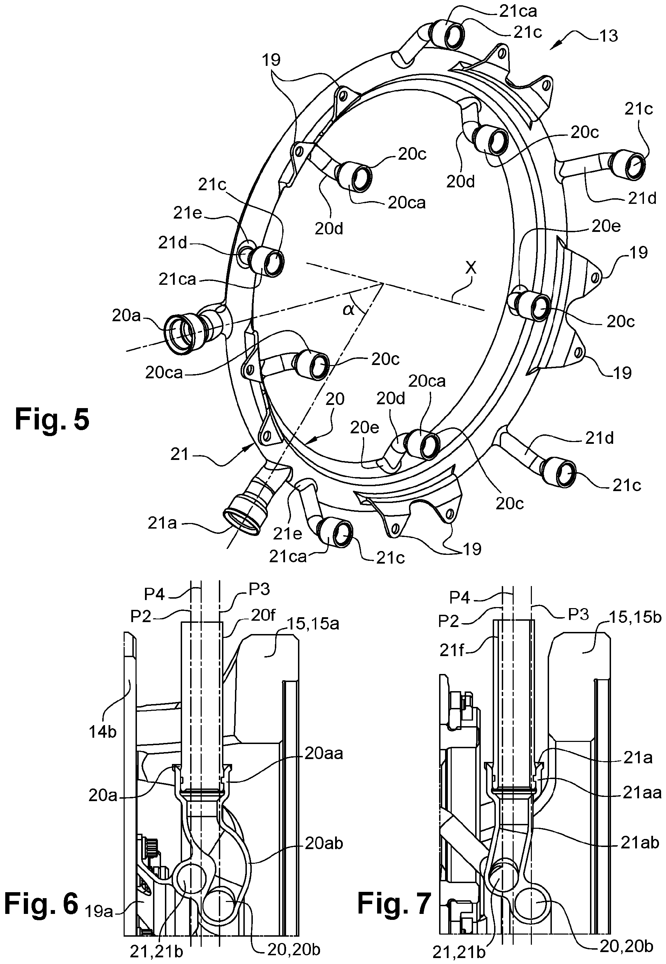

Le réducteur 6 comprend un distributeur 13 d'huile de lubrification perfectionné qui est mieux visible à la figure 5.

Le distributeur 13 a une forme générale annulaire autour de l'axe X et est formé d'une seule pièce. Il est ici rapporté et fixé sur le porte-satellites 10 et comprend pour cela des pattes 19a de fixation sur la cage 14 du porte-satellites et en particulier sur sa paroi arrière 14b, comme représenté à la figure 4. Les pattes 19a sont régulièrement réparties autour de l'axe X et comprennent des portions appliquées sur la face radiale aval de la paroi 14b et comportant des orifices de passage de vis 19b vissées dans des trous taraudés de la paroi 14b.

Le distributeur 13 comprend des premier et second circuits d'huile 20, 21 indépendants, le premier circuit d'huile 20 comportant une première entrée d'huile 20a reliée par une première chambre annulaire 20b à plusieurs sorties d'huile 20c réparties sur une première circonférence C1 autour de l'axe X, et le second circuit d'huile 21 comporte une seconde entrée d'huile 21a reliée par une seconde chambre annulaire 21b à plusieurs sorties d'huile 21c réparties sur une seconde circonférence C2 autour de l'axe X (figures 3 et 5).

La circonférence C1 a un diamètre D1 et la circonférence C2 a un diamètre D2, D2 étant supérieur à D1. Les sorties d'huile 20c se trouvent sur D1 ou C1 et les sorties 21c se trouvent sur D2 ou C2. Dans l'exemple représenté, D1 et D2 sont chacun supérieurs à D3 et inférieurs à D5.

Le distributeur 13 est diamétralement plus petit que D5 ce qui autorise son montage/démontage sans avoir besoin de démonter d'autres éléments du réducteur. A cause des broches 17 et des déflecteurs 18, la cage et le porte-cage sont montés en premier, puis le solaire 7, les satellites 8, les axes 10b et enfin le distributeur 13, comme cela sera décrit plus en détail dans ce qui suit.

Le diamètre externe du distributeur 13 correspond à l'extrémité des entrées 20a, 21a (qui se terminent à la même circonférence).

Les chambres 20b, 21b sont formées par deux anneaux tubulaires coaxiaux et intimement liés, c'est-à-dire que leurs parois tubulaires sont fusionnées. Les chambres ont en section axiale une forme générale circulaire et les sections de passage des chambres sont sensiblement constantes sur toute leur étendue angulaire et sensiblement identiques l'une à l'autre.

La première chambre 20b s'étend sensiblement sur une circonférence C4 de diamètre D4 compris entre D1 et D2. La seconde chambre 21b s'étend sensiblement sur une autre circonférence C4' de diamètre D4' compris entre D1 et D2. D4' est supérieur à D4. Les circonférences C4 et C4' sont centrées sur l'axe X. D1 est inférieur à D4 et D4' alors que D2 est supérieur à D4 et D4'. Il est avantageux que C4 et C4' soient situées sensiblement à mi-distance (radiale) de C1 et C2, car cela rigidifie le distributeur 13.

La chambre 21b de plus grand diamètre est située en avant de celle 20b de plus petit diamètre. Comme on le voit à la figure 4, les chambres s'étendant dans des plans P2, P3 perpendiculaires à l'axe X, qui passent entre la cage 14, d'une part, et l'anneau 15b du porte-cage 15, d'autre part. On constate également sur cette figure que le plan P3 qui passe par la seconde chambre 20b ou chambre arrière est proche du tronçon 3b de l'arbre BP 3 et son diamètre D4' est supérieur à celui D3' du tronçon 3b pour éviter tout risque de contact en fonctionnement.

Les entrées 20a, 21a sont orientées en direction radiale par rapport à l'axe X. Elles sont de préférence situées dans un même plan P4 perpendiculaire à l'axe X et sont inclinées l'une par rapport à l'autre dans ce plan P4 d'un angle α déterminé (figures 5 à 7). Cet angle α est par exemple compris entre 30 et 60°. Comme on le voit à la figure 4, les entrées 20a, 21a sont orientées respectivement selon des directions qui traversent chacune un des secteurs d'espace S précités. Un doigt 15a du porte-cage passe entre les deux entrées 20a, 21a.

Les plans P2, P3 et P4 sont situés entre la cage 14 et l'anneau 15b du porte-cage 15 (figures 6 et 7).

Le distributeur 13 est avantageusement configuré pour être raccordé fluidiquement, au niveau de ses entrées et de ces sorties, par des emmanchements du type mâle-femelle, c'est-à-dire par des raccords nécessitant seulement un emboîtement par translation axiale d'un raccord mâle dans un raccord femelle. Même si un raccord est présenté dans ce qui suit comme mâle et destiné à coopérer avec un raccord femelle, il peut en variante être remplacé par un raccord femelle destiné donc à coopérer avec un raccord mâle, et inversement.

En ce qui concerne les entrées 20a, 21a, elles comprennent chacune un raccord femelle 20aa, 21aa dans l'exemple représenté qui est destiné à recevoir le raccord mâle d'un tuyau 20f, 21f d'alimentation (figures 4, 6 et 7). Les tuyaux 20f, 21f sont rectilignes et traversent les secteurs d'espace S précités et sont destinés à traverser également des bras tubulaires d'un carter intermédiaire de la turbomachine 1, en vue du raccordement du distributeur 13 à une source d'huile de lubrification. Le nombre de bras du carter intermédiaire peut être supérieur à 5 et donc au nombre de secteurs d'espace S. L'étanchéité des raccords mâle-femelle peut être assurée par des joints toriques ou analogues.

Les raccords femelles 20aa, 21aa des entrées 20a, 21a sont reliés aux chambres respectives par des conduites 20d, 21d. Le raccord 20aa de l'entrée 20a est relié à la chambre 20b la plus éloignée du plan P4 par une conduite 20ab qui a une forme générale de S (figure 6). Le raccord 21aa de l'entrée 21a est relié à la chambre 21b la plus proche du plan P4 par une conduite 21ab qui a une forme rectiligne ou légèrement coudé (figure 7).

En ce qui concerne les sorties 20c, elles comprennent chacune un raccord femelle 20ca dans l'exemple représenté qui est destiné à recevoir le raccord mâle d'un des déflecteurs 18. Ces sorties 20c sont orientées axialement, toutes dans la même direction ici vers l'avant. Les raccords 20ca de ces sorties sont reliées à la chambre 20b par des canaux 20d sensiblement en L ou V (figure 5).

En ce qui concerne les sorties 21c, elles comprennent chacune un raccord femelle 21ca dans l'exemple représenté qui est destiné à recevoir le raccord mâle d'un des noyaux 22 de lubrification et de refroidissement des axes 10b des satellites 8. Ces sorties 21c sont orientées axialement, toutes dans la même direction ici vers l'avant. Les raccords 21ca de ces sorties sont reliées à la chambre 21b par des conduits 21d sensiblement en L ou V.

Comme on le voit à la figure 3, les longueurs ou dimensions axiales des canaux 20d et des conduits 21d sont différentes, les sorties 21c étant situées dans un plan P5 perpendiculaire à l'axe X qui est plus en avant que celui P6 qui passe par les sorties 20c. Les plans P5 et P6 sont situés dans la cage 14.

Enfin, comme on le voit à la figure 5, les canaux 20d sont reliés à l'anneau formant la chambre 20b par des piquages 20e situés sur la périphérie interne de cet anneau, alors que les conduits 21d sont reliés à l'anneau formant la chambre 21b par des piquages 21e situés sur la périphérie externe de cet anneau (figure 5).

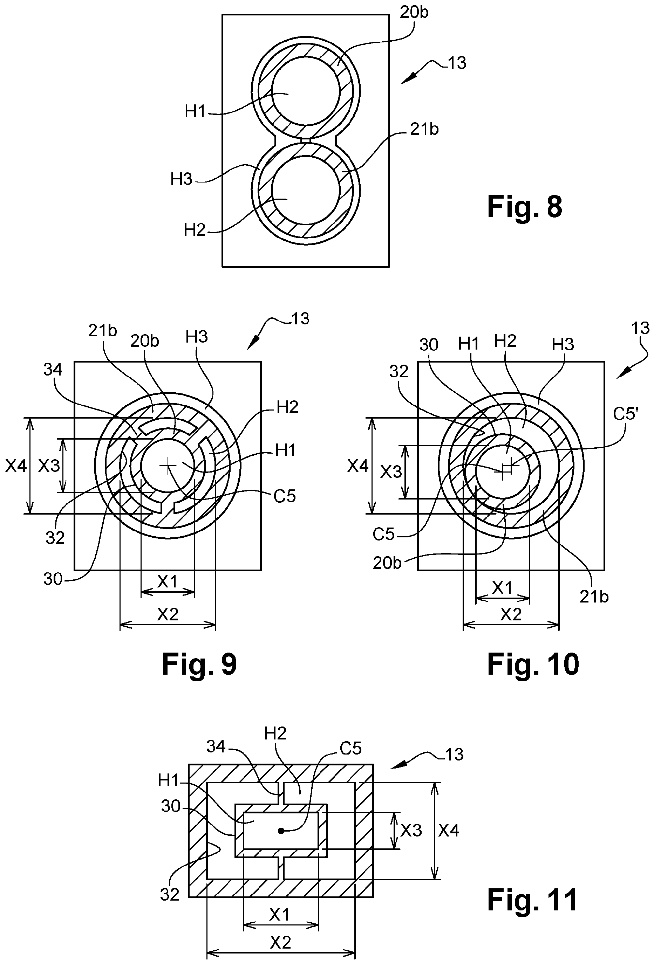

Comme évoqué dans ce qui précède et schématiquement représenté à la figure 8, les chambres 20b, 21b sont formées par deux anneaux tubulaires coaxiaux et intimement liés.

L'huile qui circule dans la chambre 20b a une température T1 qui peut être de l'ordre de 100°C par exemple. Cette huile dite « froide » est désignée par H1. L'huile qui circule dans la chambre 21b a une température T2 qui peut être de l'ordre de 140°C. Cette huile dite « chaude » est désignée par H2. Les températures T1 et T2 ne sont pas choisies au hasard mais sont au contraire déterminées pour optimiser la lubrification des pièces du réducteur. Après avoir lubrifié ces pièces, l'huile est réchauffée et peut atteindre une température T3 de l'ordre de 160°C par exemple. Cette huile réchauffée, désignée par H3, est soumise à des champs centrifuges et peut être projetée sur le distributeur 13. Cette huile H3 peut réchauffer par conduction les huiles H1, H2. La différence de température est plus importante entre H3 et H1 (40°C dans l'exemple précité) qu'entre H2 et H1 (20°C). L'huile H1 risque donc de se réchauffer davantage et d'adopter une température supérieure à la température optimale de l'huile dans le premier circuit.

L'invention propose une solution à ce problème qui est illustrée par trois variantes aux figures 9 à 11.

L'invention propose que la section de la première chambre 20b, de circulation de l'huile froide H1, soit imbriquée dans la section de la seconde chambre 21b, de circulation de l'huile chaude H2. Cela va permettre ainsi de limiter le risque d'échauffement de l'huile H1 par l'huile H3 car l'huile H3 sera principalement au contact de la seconde chambre 21b et moins de la première chambre 20b.

Dans la première variante illustrée à la figure 9, chaque chambre 20b, 21b est formée par un anneau tubulaire qui a ici en section une forme circulaire ou annulaire. La chambre 20b a en section une forme circulaire et s'étend sur une circonférence C5. La chambre 21b a en section une forme annulaire et s'étend tout autour de la chambre 20b. La chambre 21b s'étend sur la même circonférence C5. La chambre 20b, appelée chambre interne, est donc complètement isolée de l'huile H3.

L'anneau de la chambre 20b comprend une surface externe 30 qui est écartée de la surface interne 32 de l'anneau de la chambre 21b. Ces surfaces 30, 32 sont reliées entre elles par des ponts de matière 34. Le distributeur 13 peut être réalisé d'une seule pièce, en particulier par fabrication additive.

Dans la variante illustrée à la figure 10, chaque chambre 20b, 21b est formée par un anneau tubulaire qui a ici en section une forme circulaire tronquée. La chambre 20b a en section une forme circulaire et s'étend sur une circonférence C5. La chambre 21b a en section une forme circulaire tronquée et s'étend autour de la chambre 20b. La chambre 21b s'étend sur une circonférence C5' qui a un diamètre supérieur à celui de C5. La chambre 20b, appelée chambre interne, est complètement isolée de l'huile H3.

L'anneau de la chambre 20b comprend une surface externe 30 qui est, en une zone, au contact de la surface interne 32 de l'anneau de la chambre 21b. Ces surfaces 30, 32 sont ainsi directement reliées entre elles et sont ici tangentes. Le distributeur 13 peut être réalisé d'une seule pièce, en particulier par fabrication additive.

Dans la variante illustrée à la figure 11, les sections des chambres 20b, 21b sont polygonales et en particulier rectangulaires. Chaque chambre est formée par un anneau tubulaire qui a ici en section une forme rectangulaire. Les chambres 20b, 21b s'étendent autour d'une même circonférence C5.

L'anneau de la chambre 20b comprend une surface externe 30 qui est écartée de la surface interne 32 de l'anneau de la chambre 21b. Ces surfaces 30, 32 sont reliées entre elles par des ponts de matière 34. Le distributeur 13 peut être réalisé d'une seule pièce, en particulier par fabrication additive.

Dans encore une autre variante non représentée, il serait possible de combiner les modes de réalisation des figures 10 et 11 et avoir ainsi des chambres à section polygonale. Une des parois d'une des chambres pourrait être commune voire confondue avec une des parois de l'autre des chambres. L'une des chambres aurait une section rectangulaire et l'autre des chambres aurait une forme générale en U.

Contrairement aux chambres 20b, 21b du distributeur de la figure 8, les chambres du distributeur des variantes des figures 9 à 11 ont des dimensions transversales X1 et X2, mesurées le long de l'axe X, qui sont différentes. Les chambres 20b, 21b du distributeur des variantes des figures 9 à 11 ont également des dimensions transversales X3 et X4, mesurées perpendiculairement à l'axe X, qui sont différentes. Les dimensions X1 et X3 des chambres 20b des figures 9 à 11 peuvent être identiques à celles de la chambre 20b de la figure 8. Les dimensions X2 et X4 des chambres 21b des figures 9 à 11 peuvent être choisies pour que ces chambres aient la même section hydraulique que celui de la chambre 21b de la figure 8.

## Revendications

1. Distributeur (13) d'huile de lubrification pour un réducteur mécanique (6) de turbomachine (1), en particulier d'aéronef, ce distributeur ayant une forme générale annulaire autour d'un axe X et comportant des premier et second circuits d'huile (20, 21) indépendants, ledit premier circuit d'huile (20) comportant une première entrée d'huile (20a) reliée par une première chambre annulaire (20b) à plusieurs sorties d'huile (20c), et ledit second circuit d'huile (21) comportant une seconde entrée d'huile (21a) reliée par une seconde chambre annulaire (21b) à plusieurs sorties d'huile (21c), **caractérisé en ce qu'**il est formé d'une seule pièce, et **en ce que** ladite première chambre comporte une section qui est au moins en partie imbriquée dans une section de ladite seconde chambre.

2. Distributeur (13) selon la revendication 1, dans lequel la section de ladite première chambre (20b) est au moins en partie entourée par la section de ladite seconde chambre (21b).

3. Distributeur (13) selon la revendication 1 ou 2, dans lequel lesdites première et seconde chambres (20b, 21b) s'étendent autour d'une même circonférence (C5).

4. Distributeur (13) selon l'une des revendications précédentes, dans lequel lesdites première et seconde chambres (20b, 21b) ont des dimensions transversales mesurées le long de l'axe X, qui sont différentes.

5. Distributeur (13) selon l'une des revendications précédentes, dans lequel lesdites première et seconde chambres (20b, 21b) ont des dimensions transversales mesurées perpendiculairement audit axe X, qui sont différentes.

6. Distributeur (13) selon l'une des revendications précédentes, dans lequel lesdites première et seconde chambres (20b, 21b) sont formées par deux anneaux tubulaires coaxiaux.

7. Distributeur (13) selon la revendication 6, dans lequel l'anneau de ladite première chambre (20b) comprend une surface externe (30) qui est reliée directement ou par des ponts de matière (34) à une surface interne (32) de l'anneau de ladite seconde chambre (21b).

8. Distributeur (13) selon l'une des revendications précédentes, dans lequel lesdites première et seconde chambres (20b, 21b) ont en section une forme générale circulaire ou polygonale.

9. Distributeur (13) selon l'une des revendications précédentes, dans lequel lesdites première et seconde chambres (20b, 21b) ont des sections de formes et de tailles différentes.

10. Réducteur mécanique (6) de turbomachine (1), en particulier d'aéronef, comportant un distributeur (13) selon l'une des revendications précédentes.

11. Procédé de fabrication d'un distributeur selon l'une des revendications 1 à 8, comportant une étape de fabrication additive de ce distributeur.

## Patentansprüche

1. Verteiler (13) für Schmieröl für einen mechanischen Reduktor (6) einer Turbomaschine (1), insbesondere eines Flugzeugs, wobei dieser Verteiler eine allgemeine ringförmige Form um eine X-Achse aufweist und einen ersten und einen zweiten Ölkreislauf (20, 21) umfasst, die unabhängig sind, wobei der erste Ölkreislauf (20) einen ersten Öleingang (20a) umfasst, der durch eine erste ringförmige Kammer (20b) mit mehreren Ölausgängen (20c) verbunden ist, und wobei der zweite Ölkreislauf (21) einen zweiten Öleingang (21a) umfasst, der durch eine zweite ringförmige Kammer (21b) mit mehreren Ölausgängen (21c) verbunden ist, **dadurch gekennzeichnet, dass** er aus einem einzigen Stück gebildet ist und dass die erste Kammer einen Abschnitt umfasst, der zumindest teilweise in einen Abschnitt der zweiten Kammer greift.

2. Verteiler (13) nach Anspruch 1, wobei der Abschnitt der ersten Kammer (20b) zumindest teilweise von dem Abschnitt der zweiten Kammer (21b) umgeben ist.

3. Verteiler (13) nach Anspruch 1 oder 2, wobei die erste und die zweite Kammer (20b, 21b) sich um einen selben Umfang (C5) erstrecken.

4. Verteiler (13) nach einem der vorstehenden Ansprüche, wobei die erste und die zweite Kammer (20b, 21b) entlang der X-Achse gemessene Querabmessungen aufweisen, die unterschiedlich sind.

5. Verteiler (13) nach einem der vorstehenden Ansprüche, wobei die erste und die zweite Kammer (20b, 21b) senkrecht zur X-Achse gemessene Querabmessungen aufweisen, die unterschiedlich sind.

6. Verteiler (13) nach einem der vorstehenden Ansprüche, wobei die erste und die zweite Kammer (20b, 21b) durch zwei koaxiale rohrförmige Ringe gebildet sind.

7. Verteiler (13) nach Anspruch 6, wobei der Ring der ersten Kammer (20b) eine Außenfläche (30) umfasst, die unmittelbar oder über Materialbrücken (34) mit einer Innenfläche (32) des Rings der zweiten Kammer (21b) verbunden ist.

8. Verteiler (13) nach einem der vorstehenden Ansprüche, wobei die erste und die zweite Kammer (20b, 21b) im Querschnitt eine allgemeine runde oder polygonale Form aufweisen.

9. Verteiler (13) nach einem der vorstehenden Ansprüche, wobei die erste und die zweite Kammer (20b, 21b) Querschnitte unterschiedlicher Formen und Größen aufweisen.

10. Mechanischer Reduktor (6) einer Turbomaschine (1), insbesondere eines Flugzeugs, umfassend einen Verteiler (13) nach einem der vorstehenden Ansprüche.

11. Verfahren zur Herstellung eines Verteilers nach einem der Ansprüche 1 bis 8, umfassend einen Schritt zum additive Herstellen dieses Verteilers.

## Claims

1. Lubricating oil distributor (13) for a mechanical reduction gear (6) of a turbine engine (1), in particular of an aircraft, said distributor having a general annular shape around an axis X and comprising first and second independent oil circuits (20, 21), said first oil circuit (20) comprising a first oil inlet (20a) connected by a first annular chamber (20b) to several oil outlets (20c), and said second oil circuit (21) comprising a second oil inlet (21a) connected by a second annular chamber (21b) to several oil outlets (21c), **characterised in that** it is formed of a single part, and **in that** said first chamber comprises a section that is at least partially nested in a section of said second chamber.

2. Distributor (13) according to claim 1, wherein the section of said first chamber (20b) is at least partially surrounded by the section of said second chamber (21b).

3. Distributor (13) according to claim 1 or 2, wherein said first and second chambers (20b, 21b) extend over a same circumference (C5).

4. Distributor (13) according to one of the preceding claims, wherein said first and second chambers (20b, 21b) have transversal directions, measured along the axis X, that are different.

5. Distributor (13) according to one of the preceding claims, wherein said first and second chambers (20b, 21b) have transversal directions, measured perpendicular to said axis X, that are different.

6. Distributor (13) according to one of the preceding claims, wherein said first and second chambers (20b, 21b) are formed by two coaxial tubular rings.

7. Distributor (13) according to claim 6, wherein the ring of said first chamber (20b) comprises an outer surface (30) that is directly connected or connected by physical bridges (34) to an inner surface (32) of the ring of said second chamber (21b).

8. Distributor (13) according to one of the preceding claims, wherein said first and second chambers (20b, 21b) have a section that is generally circular or polygonal in shape.

9. Distributor (13) according to one of the preceding claims, wherein said first and second chambers (20b, 21b) have sections of different shapes and sizes.

10. Reduction gear (6) of a turbine engine (1), in particular of an aircraft, comprising a distributor (13) according to one of the preceding claims.

11. Method for manufacturing a distributor according to one of claims 1 to 8, comprising a step of additive manufacturing of said distributor.
